Europäisches Patentamt

European Patent Office

Office européen des brevets

(11) Veröffentlichungsnummer : **0 220 457 B1**

(12) # EUROPÄISCHE PATENTSCHRIFT

(45) Veröffentlichungstag der Patentschrift :
**30.01.91 Patentblatt 91/05**

(51) Int. Cl.$^5$ : **G01B 7/10, G01N 33/38**

(21) Anmeldenummer : **86112741.3**

(22) Anmeldetag : **16.09.86**

(54) **Verfahren und Vorrichtung zum Vermessen von in nichtmagnetischen Materialien verlegten ferromagnetischen Gegenständen.**

(30) Priorität : **02.10.85 DE 3535117**

(43) Veröffentlichungstag der Anmeldung :
**06.05.87 Patentblatt 87/19**

(45) Bekanntmachung des Hinweises auf die
Patenterteilung :
**30.01.91 Patentblatt 91/05**

(84) Benannte Vertragsstaaten :
**AT BE CH DE FR GB IT LI LU NL SE**

(56) Entgegenhaltungen :
**EP-A- 0 080 676**
**DE-A- 2 702 641**
**GB-A- 1 436 559**
**US-A- 4 531 091**
**NONDESTRUCTIVE TESTING HANDBOOK,**
**Band. II, 1959, Seiten 34.15-34.18, The Ronald**
**Press Co., New York, US;**

(73) Patentinhaber :
**FRAUNHOFER-GESELLSCHAFT ZUR**
**FÖRDERUNG DER ANGEWANDTEN**
**FORSCHUNG E.V.**
**Leonrodstrasse 54**
**D-8000 München 19 (DE)**

(72) Erfinder : **Dobmann, Gerd, Dr.**
**Scheidterstrasse 23A**
**D-6602 Dudweiler (DE)**
Erfinder : **Kopp, Harald**
**Lebacherstrasse 56**
**D-6600 Saarbrücken (DE)**
Erfinder : **Kroggel, Otto, Dr.**
**Mühltalstrasse 68**
**D-6100 Darmstadt (DE)**
Erfinder : **Fritz, Christoph**
**Ahastrasse 10**
**D-6100 Darmstadt (DE)**
Erfinder : **Fey, Jochen**
**Mauerstrasse 1**
**D-6100 Darmstadt (DE)**

(74) Vertreter : **Rackette, Karl, Dipl.-Phys. Dr.-Ing**
**Kaiser-Joseph-Strasse 179 Postfach 1310**
**D-7800 Freiburg (DE)**

**Beschreibung**

Die Erfindung betrifft ein Verfahren zum magnetischen Vermessen von in nichtmagnetischen Materialien verlegten ferromagnetischen Gegenständen gemäß dem Oberbegriff des Anspruch 1.

Ein derartiges Verfahren ist aus der US-A-4 531 091 bekannt und dient zum magnetischen Vermessen von Bewehrungsstählen in Beton, um Durchmesserveränderungen, insbesondere beim teilweisen oder ganzen Zerreißen von Bewehrungsstählen, zu erfassen. Bei dem bekannten Verfahren werden der Aufsatzmagnet und die zwischen seinen Polen vorgesehene Magnetfeldsonde gemeinsam entlang der Längsachse der Bewehrungsstähle verfahren. Die dabei von verschiedenen Magnetfeldsondenelementen erfaßten Amplitudenortskurven werden bezüglich ihres spektralen Gehaltes und ihrer Korrelation mit Musterverläufen untersucht. Außerdem ist vorgesehen, die bei der Bewegung des Aufsatzmagneten von verschiedenen Magnetfeldsondenelementen erfaßten Amplitudenoztskurven Punkt für Punkt einer Differenzbildung zu unterwerfen. Während der Erfassung der Amplitudenortskurven bleibt die Anordnung der Magnetfeldsonden zwischen den Polschuhen des in Richtung der Bewehrungsstähle verschiebbaren Aufsatzmagneten unverändert. Das zwischen den Polen des Aufsatzmagneten verlaufende Magnetfeld erstreckt sich parallel zu den zu untersuchenden Bewehrungsstählen. Das bekannte Verfahren und die entsprechende bekannte Vorrichtung gestatten es bei Kenntnis des Verlaufs der Bewehrungsstähle zu überprüfen, ob diese ganz oder teilweise beschädigt sind. Eine genaue Messung des Durchmessers der Bewehrungsstähle und der darüberliegenden Betonüberdeckung ist nicht möglich.

In der DE-A-2 702 641 sind ein Verfahren und eine Meßanordnung zur berührungslosen Bestimmung der Banddicke ferromagnetischer Materialien mittels eines mit Gleichstrom erregten Meßfühlers nach der Methode der Sättigungsmagnetisierung beschrieben. Für einen magnetischen Kreis mit schwankendem Luftspalt zum Prüfobjekt ist die Spannungsänderung an der Erregerfeldspule bei einer Stromeinprägung dem Luftspalt direkt proportional. Die mit einer Hall-Sonde im Mittelschenkel des Joches gemessene Sättigungsmagnetisierung hängt vom Luftspalt und der Banddicke des zu untersuchenden Blechmaterials ab. Aus der Erregerspannungsänderung für die Erregerfeldspule wird bei der bekannten Meßanordnung eine Korrektur für die Hall-Spannung abgeleitet, so daß das korrigierte Signal nur noch von der Banddicke abhängig ist. Es ist nicht möglich und vorgesehen, den Durchmesser und die Betonüberdeckung von Bewehrungsstählen zu vermessen.

In der EP-A1-0 080 676 ist ein Prüfgerät für die Bestimmung der Betonüberdeckung beschrieben, das es gestattet, bei der Abnahme von stahlarmierten Betonbauten oder Betonteilen die Einhaltung der vorgeschriebenen Betonüberdeckung zu prüfen. Bei dem bekannten Prüfgerät wird zur Feststellung der Betonüberdeckung die in Abhängigkeit des Abstandes zu ferromagnetischen Teilen variable Haftkraft eines Dauermagneten oder Dauermagnetsystems ausgenutzt. Dazu ist es jedoch erforderlich, das bekannte Prüfgerät zuvor auf die vorgeschriebene Betonüberdeckung zu eichen. Aus diesem Grunde ist die Handhabung des bekannten Prüfgerätes unsicher und mit großen Meßfehlern verbunden. Es sind auch bereits Geräte zur Messung der Betonüberdeckung und zur Abschätzung des Stabdurchmessers bekannt, die auf dem Prinzip der Bedämpfung eines Parallelschwingkreises beruhen. Bei diesen Geräten wird Wechselstrom bestimmter Frequenz durch eine Sondenspule geschickt, die ein magnetisches Wechselfeld erzeugt. Metallische Gegenstände, die sich im Wirkungsbereich dieses Wechselfeldes befinden, bewirken eine Änderung der Spulenspannung in Abhängigkeit der Überdeckung und des Stabdurchmessers. Bei unbekannten Stabdurchmessern ergeben sich bei einem solchen Armierungsgerät, das beispielsweise in einem Prospekt der Firma Proceq S.A., Zürich, beschrieben ist, größere Meßfehler. Es ist auch möglich, die Überdeckung mit Hilfe der magnetischen Widerstandsmessung zu messen, wenn der Durchmesser der Stahlbewehrung bekannt ist. Bei einer Wirbelstromimpedanzmessung mit empirischer Kalibration ergeben sich Probleme infolge der starken Permeabilitätsschwankungen in Stahl.

Ausgehend von diesem Stand der Technik liegt der Erfindung die Aufgabe zugrunde, ein Verfahren und eine Vorrichtung zu schaffen, die es gestatten, neben der Überdeckung auch den Durchmesser der Armierung zu bestimmen, ohne daß ein Kalibrier- oder Vergleichskörper benötigt werden muß.

Diese Aufgabe wird erfindungsgemäß durch die Kennzeichnenden Merkmale des Anspruch 1 gelöst.

Die Vorrichtung zur Durchführung des Verfahrens verfügt über eine gleichstromdurchflossene Erregerspule auf einem U-förmigen Joch eines Aufsatzmagneten, zwischen dessen Polschuhen eine Abtasteinrichtung für das Magnetfeld im Bereich zwischen den Polschuhen vorgesehen ist, die an eine Auswerteeinrichtung angeschlossen ist, und ist dadurch gekennzeichnet, daß durch die Abtasteinrichtung die rechtwinklig zur als Aufsatzebene verwendete Materialoberfläche orientierte Normalkomponente des Magnetfeldes entlang einem geradlinigen Abtastweg zwischen den Polschuhen als Amplitudenortskurve erfaßbar ist, daß die Auswerteeinrichtung eine Subtrahierschaltung für die Bestimmung einer Differenzortskurve aus einer ersten bei der Anwesenheit des gesuchten ferromagnetischen Gegenstandes erfaßten und

2

einer zweiten ohne Anwesenheit des Gegenstandes erfaßten Amplitudenortskurve aufweist, und daß der Ausgang der Subtrahierschaltung mit einem Differenzortskurvenspeicher verbunden ist, dessen Ausgang an eine einen Kalibrierspeicher aufweisende Rechenschaltung angeschlossen ist, die ein Programm zur Auswertung der Differenzortskurve unter Berücksichtigung der dem Kalibrierspeicher entnommenen Werte und zur Berechnung der Überdeckung durch das nichtmagnetische Material sowie des Durchmessers des ferromagnetischen Gegenstandes aufweist.

Zweckmäßige Weiterbildungen und Ausgestaltungen der Erfindung sind in den abhängigen Ansprüchen gekennzeichnet.

Die Erfindung wird nachfolgend anhand von Ausführungsbeispielen näher erörtert. Es zeigen :

Fig. 1 einen Aufsatzmagneten zur Durchführung des erfindungsgemäßen Verfahrens mit seinem Magnetfeld bei Abwesenheit ferromagnetischer Gegenstände, seitlich im Schnitt,

Fig. 2 eine Aufsicht auf die Polschuhe des Aufsatzmagneten gemäß Fig. 1 mit einer Amplitudenortskurve für den Feldverlauf,

Fig. 3 eine Fig. 1 entsprechende Darstellung, wobei jedoch ein Bewehrungsstab auf der Symmetrieachse des Abtastmagneten quer zum Feld verläuft,

Fig. 4 eine Fig. 2 entsprechende Darstellung zur Veranschaulichung der Verformung der Amplitudenortskurve beim Einführen eines ferromagnetischen Gegenstandes in das Magnetfeld,

Fig. 5 die durch einen Bewehrungsstahl erzeugte Streufeldortskurve,

Fig. 6 den zugeordneten Abtastweg zwischen den Polschuhen des Aufsatzmagneten,

Fig. 7 eine Abtasteinrichtung mit einer mechanisch verfahrbaren Magnetsonde,

Fig. 8 eine Abtasteinrichtung mit einer Vielzahl von einzelnen Magnetfeldsonden, die auf einem Sondenarrayträger angeordnet sind,

Fig. 9 eine Auswerteeinrichtung zum Anschließen an die Abtasteinrichtung gemäß Fig. 7 und

Fig. 10 eine Auswerteeinrichtung zum Anschließen an eine Abtasteinrichtung gemäß Fig. 8.

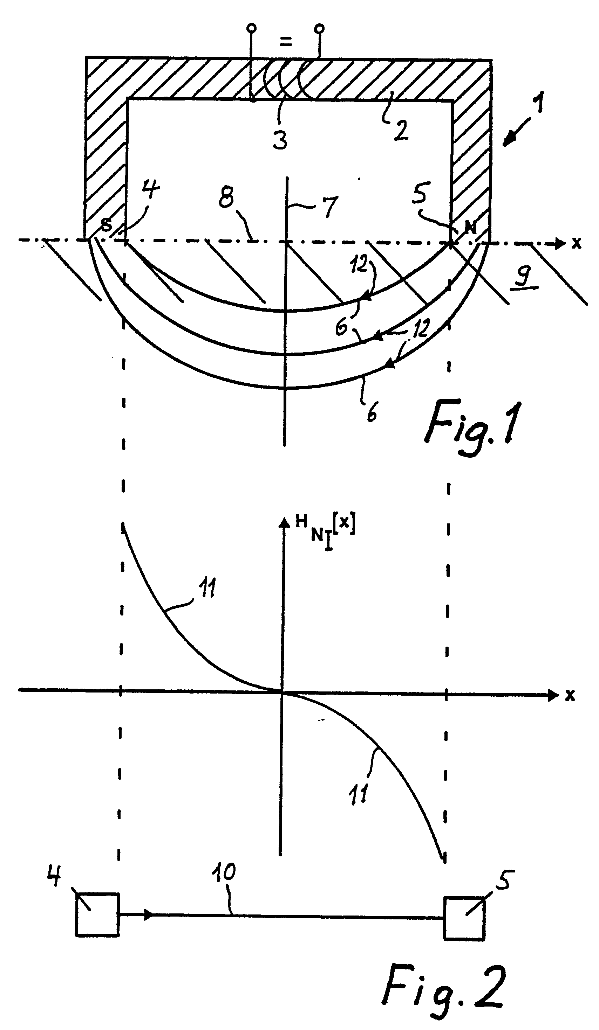

In Fig. 1 ist schematisch ein Querschnitt durch einen Aufsatzmagneten 1 dargestellt, der über ein U-förmiges Joch 2 verfügt, auf dem eine an einen Gleichstrom anschließbare Erregerspule 3 aufgewickelt ist.

Nach dem Anschließen der Erregerspule 3 an eine in der Zeichnung nicht dargestellte Gleichstromquelle bildet sich zwischen den Polschuhen 4, 5 des Aufsatzmagneten 1 ein Magnetfeld 6 in Gestalt eines magnetischen Gleichfeldes aus. Die Lage des in der Zeichnung mit S bezeichneten Südpols und des mit N bezeichneten Nordpols hängt von der Polarität der an die Erregerspule 3 angeschlossenen Gleichspannungsquelle ab. Für einen festen Ort zwischen den Polschuhen 4, 5 wächst das Magnetfeld 6 linear mit der Stromstärke durch die Erregerspule 3 an. Das Magnetfeld 6 ist örtlich inhomogen, jedoch bezüglich der mit dem Bezugszeichen 7 versehenen Symmetrieachse des Joches 2 symmetrisch.

Der in Fig. 1 dargestellte Verlauf des Magnetfeldes 6 ändert sich nicht, wenn der Aufsatzmagnet 1 auf die Oberfläche 8 eines keine ferromagnetische Gegenstände, insbesondere keine Armierung oder Bewehrungsstähle enthaltenden Betons 9 aufgesetzt wird. Der in Fig. 1 dargestellte Verlauf des Magnetfeldes 6 ist daher in Beton und Luft gleich.

In Fig. 2 ist eine Draufsicht auf die Polschuhe 4, 5 mit einem zwischen den Polschuhen 4, 5 gradlinig verlaufenden Abtastweg 10 dargestellt. Ordnet man dem auf der Oberfläche 8 liegenden Abtastweg 10 die Ortskoordinate x zu, so ergibt sich für die senkrecht auf die Oberfläche 8 stehende Normalkomponente des Magnetfeldes 6 die in Fig. 2 dargestellte Amplitudenortskurve 11.

Die Größe der Normalkomponente ist als Funktion von x aufgetragen und mit $H_{NI}(x)$ bezeichnet. Der Richtung der Pfeile 12 in Fig. 1 entsprechen positive Werte der Normalkomponente links von der Symmetrieachse 7 und negative Werte rechts von der Symmetrieachse 7, was in Fig. 2 deutlich erkennbar ist.

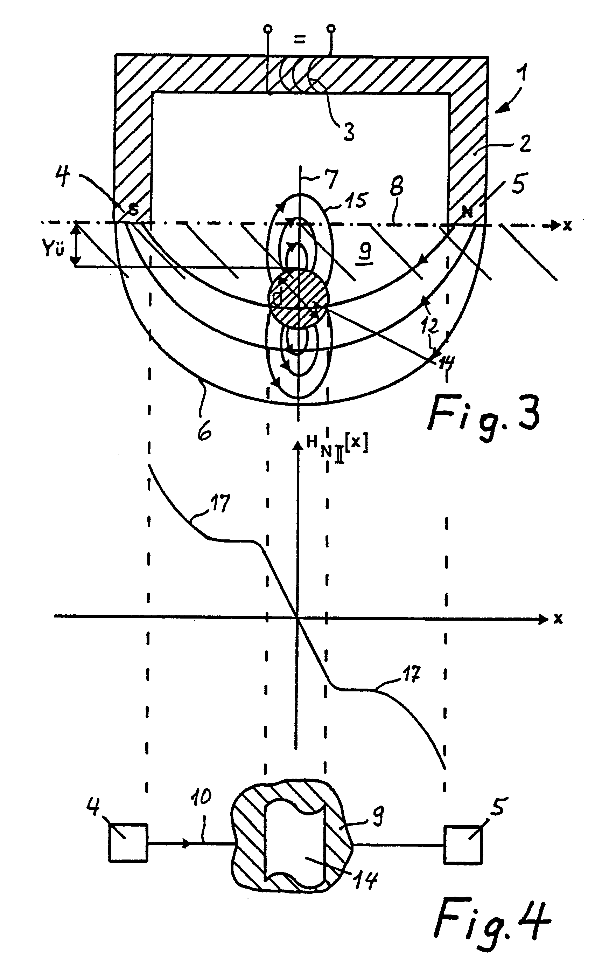

In Fig. 3 sind die im Zusammenhang mit Fig. 1 beschriebenen Teile mit den gleichen Bezugszeichen versehen. Zusätzlich zeigt Fig. 3 einen Bewehrungsstab 14 unterhalb der Oberfläche 8 auf der Symmetrieachse 7. Der Bewehrungsstab 14 hat den in der Zeichnung eingetragenen Durchmesser d.

Wenn sich im Bereich des Magnetfeldes 6, wie in Fig. 3 dargestellt, im Beton 9 der Bewehrungsstab 14 einer Armierung befindet, wird dieser senkrecht zur Stabachse vom Magnetfeld 6 angeströmt, wobei der magnetisierbare Bewehrungsstab 14 mit einem Streufeld 15 von der Feldstärke $H_s$ reagiert, das sich dem als Erregerfeld wirksamen Magnetfeld 6 linear überlagert. Das Streufeld 15 hat die Charakteristik eines Dipolfeldes, wie sich unmittelbar aus Fig. 3 ergibt.

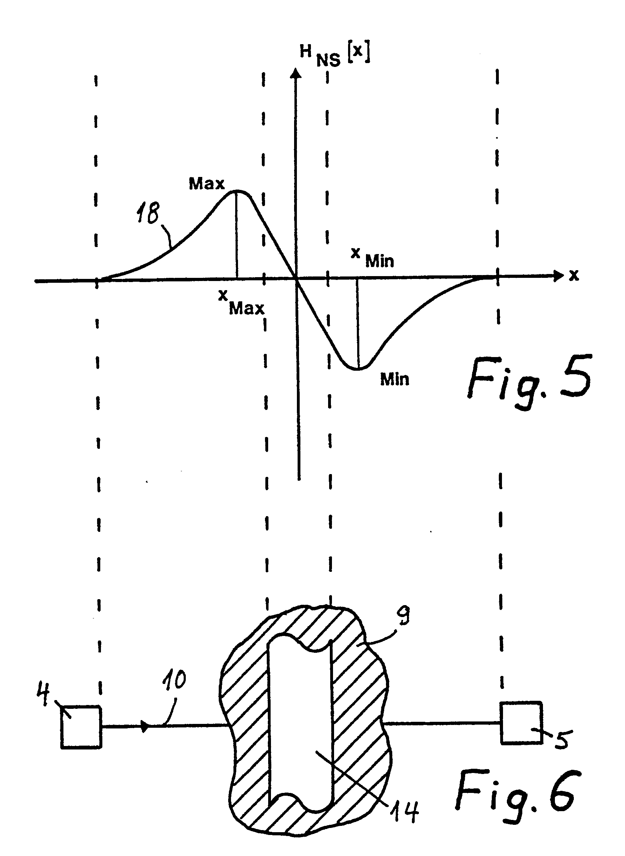

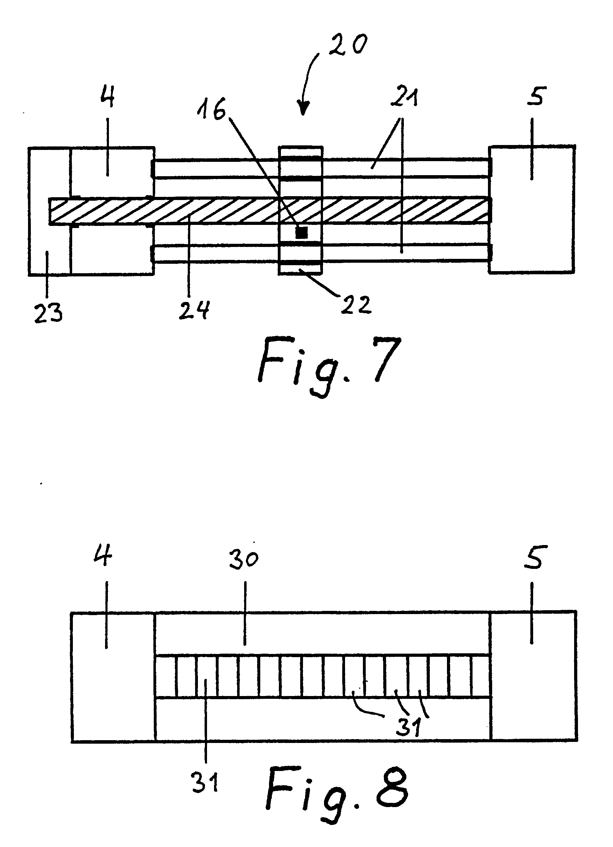

Wenn eine in Fig. 7 schematisch dargestellte Magnetfeldsonde 16 nunmehr entlang dem in Fig. 4 veranschaulichten Abtastweg 10 zwischen den Polschuhen 4, 5 auf der Oberfläche 8 des Betons 9 geführt wird, um das durch die Überlagerung des Magnetfeldes 6 und des Streufeldes 15 erzeugte Gesamtfeld abzutasten, so ergibt sich für die Normalkomponente statt der in Fig. 2 für den Prüfvorgang I dargestellten Amplitudenortskurve 11 nunmehr für den Prüfvorgang II die in Fig. 4 skizzierte Amplitudenortskurve 17 mit der Normalkomponente $H_{NII}(x)$, deren Verlauf sich deutlich von der Amplitudenortskurve 11 unterscheidet.

Die Magnetfeldsonde 16, die zur Erfassung der Superposition aus dem erregenden Magnetfeld 6 und dem Streufeld 15 verwendet wird, kann eine Hallsonde sein, die so orientiert ist, daß sie nur auf die Normalkomponente des Gesamtfeldes anspricht.

In Fig. 5 ist die Amplitudenortskurve $H_{NS}(x)$ des Streufeldes 15 dargestellt, die allein bestimmt wird von der in Fig. 3 eingezeichneten Betonüberdeckung Yü, dem Bewehrungsstabdurchmesser d und der Erregerfeldstärke H am Ort der Bewehrung, d.h. im Abstand $(Yü + \frac{d}{2})$ von der Oberfläche 8. Die Amplitudenortskurve $H_{NS}(x)$ oder Streuflußortskurve wird nachfolgend als Differenzortskurve 18 bezeichnet, da sie durch Differenzbildung aus den Amplitudenortskurven 17 und 11 abgeleitet werden kann.

Die Zuordnung der Differenzortskurve 18 zum im Beton 9 eingebetteten Bewehrungsstab 14 ist in den Figuren 5 und 6 dargestellt.

Die Zuordnung der die Größe der Normalkomponente wiedergebenden Differenzortskurve 18 zum Durchmesser d des Bewehrungsstabes ergibt sich aus dem Abstand zwischen dem in Fig. 5 eingezeichneten Maximum Max und dem ebenfalls in Fig. 5 eingezeichneten Minimim Min der Differenzortskurve 18 der Normalkomponenten. Die Lage des Maximums und des Minimums der Differenzortskurve 18 sind unabhängig von der Amplitude H des erregenden Magnetfeldes 6. Bezeichnet man den Abstand der Extrema entlang der x-Achse mit Delta x, so ergibt sich folgende Beziehung für den Abstand der Mitte des Bewehrungsstabes 14 von der Oberfläche 8 des Betons 9 :

$$Yü + \frac{d}{2} = \frac{Delta\ x\ \cdot\ 3^{1/2}}{2} \qquad (1)$$

Für den Durchmesser d des Bewehrungsstabs 14 gilt folgende Gleichung :

$$d^2 = \frac{Max\ \cdot\ 8\ \cdot\ (Delta\ x)^2}{H\ \cdot\ 3^{1/2}} \qquad (2)$$

In dieser Gleichung ist H die Erregerfeldstärke am Ort der Bewehrung $(Yü + \frac{d}{2})$. Die Feldstärke H ist abhängig von der Jochgeometrie und muß für jedes zur Anwendung kommende Joch in Luft und für jede Stromstärke I in der Erregerspule 3 auf der Symmetrieachse und mögliche zu prüfende $(Yü + \frac{d}{2})$ als Abstände bestimmt und in einer Kalibrierkurve abgelegt werden. Die Stromstärke I geht in der Erregerfeldstärke H linear als Faktor ein.

Wenn in einer Anordnung gemäß Fig. 1 entlang der Symmetrieachse 7 für alle Abstände der Bewehrungsstabmitten die Erregerfeldstärken H in einer Kalibrierkurve abgelegt worden sind, kann unter Verwendung von Gleichung (1) aus Delta x der Abstand der Bewehrungsstabmitte bestimmt werden und der diesem Abstand zugeordnete Wert H der Erregerfeldstärke zusammen mit dem Wert des Maximums Max und dem Wert für Delta x in die Gleichung (2) eingesetzt werden, um d² zu bestimmen. Aus den Gleichungen (2) und (1) ergibt sich dann unmittelbar die Überdeckung Yü.

Die obigen Erörterungen zeigen, daß es mit wenigen Verfahrensschritten möglich ist, sowohl den unbekannten Durchmesser von Bewehrungsstählen in Beton als auch die unbekannte Betonüberdeckung zu messen, indem der Einfluß der ferromagnetischen Bewehrungsstähle auf ein magnetisches Gleichfeld erfaßt und ausgewertet wird. Dazu ist es erforderlich, die Oberfläche 8 des zu untersuchenden Betons 9 mit dem oben beschriebenen Aufsatzmagneten 1 abzutasten. Anschließend wird die Amplitudenortskurve 17 der rechtwinklig zur Oberfläche 8 orientierten Normalkomponente des Magnetfeldes 6, 15 zwischen den Polschuhen 4, 5 entlang der Oberfläche 8 erfaßt und gespeichert. Nach dem Absetzen des Aufsatzmagneten 1 wird bei Abwesenheit ferromagnetischer Gegenstände die Amplitudenortskurve 11 der Normalkomponente des Magnetfeldes 6 zwischen den Polschuhen 4, 5 erfaßt und gespeichert, wobei die bereits oben erwähnte Magnetfeldsonde 16 oder Hallsonde eingesetzt werden kann. Weiterhin ist es noch erforderlich, eine Kalibrierkurve zu erfassen und zu speichern, die die Erregerfeldstärke H zwischen den Polschuhen 4, 5 in Abhängigkeit vom Erregerstrom und der jeweiligen Jochgeometrie enthält. Zur Auswertung der erfaßten Meßwerte wird aus dem Amplitudenortskurven 17 und 11 die Differenzortskurve 18 gebildet, um aus dem Abstand der beiden Extrema, der oben mit Delta x bezeichnet worden ist, die Entfernung der Bewehrungsstabmitte von der Oberfläche 8 des Betons 9 unter Verwendung der obigen Gleichung (1) zu bestimmen. Schließlich wird aus dem Abstand der beiden Extrema, aus einem Extremwert, beispielsweise dem Wert Max und aus dem aus der Kalibrierkurve entnommenen Wert H für die Erregerfeldstärke am Ort der Bewehrungsstabmitte, der Durchmesser d des Bewehrungsstabs mit Hilfe der Gleichung (2) bestimmt. Die um den halben Bewehrungsstabdurchmesser kleinere Überdeckung Yü ergibt sich schließlich durch eine einfache Differenzbildung.

In Fig. 7 erkennt man schematisch eine Abtasteinrichtung 20 zum Erfassen des durch Superposition entstehenden Feldes entlang dem Abtastweg 10 auf der Oberfläche 8 des Betons 9.

Die Abtasteinrichtung 20 weist ein Führungsgestänge 21 zwischen den Polschuhen 4, 5 auf, auf dem eine Sondenhalterung 22 mit Gleitlagern auf dem Führungsgestänge 21 längsverschieblich zwischen den Polschuhen 4, 5 geführt ist. Auf der Sondenhalterung 22 ist die bereits erwähnte Magnetfeldsonde 16 angeordnet und über in der Zeichnung nicht dargestellte elektrische Leitungen mit der weiter unten beschriebenen Auswerteeinrichtung verbunden.

Die Sondenhalterung 22 kann mit Hilfe eines Schrittmotors 23 zwischen den Polschuhen 4, 5 verschoben werden, so daß beliebige x-Koordinaten entlang dem Abtastweg 10 angesteuert werden können. Dazu ist die Welle des Schrittmotors 23 mit einer Schneckenwelle 24 verbunden, um für die Sondenhalterung 22 einen Schneckenantrieb zu bilden. Die jeweilige Stellung der Magnetfeldsonde 16 zwischen den Polschuhen 4, 5 ergibt sich aus der Geometrie der Abtasteinrichtung 20 sowie den dem Schrittmotor 23 zugeführten Taktimpulsen, die den Schrittmotor 23 jeweils um einen konstanten Schrittwinkel drehen. Der Ort der Magnetfeldsonde 16 ergibt sich relativ zu einem Schenkel des Joches 2 aus der Anzahl der Schritte und dem Sondenvortrieb pro Schritt, der von der Steigung der Schneckenwelle 24 abhängt. Die Schrittzahl kann in einem Speicher der Auswerteeinrichtung als Ortskoordinate gespeichert werden, oder es ist auch möglich, die einzelnen Schrittakte zum Weiterschalten einer Speicheradresse zu verwenden.

Während in Fig. 7 eine mechanisch verfahrbare Abtasteinrichtung dargestellt ist, zeigt Fig. 8 eine Abtasteinrichtung 20 mit einem Sondenarrayträger 30, der eine Vielzahl von einzelnen Magnetfeldsonden 31 aufweist, die jeweils auf die Normalkomponente ansprechen.

Zum Erfassen der Amplitudenortskurve 17 können die von den einzelnen Magnetfeldsonden 31 gelieferten Werte durch elektronisches Durchtakten und Multiplexen dem Eingang der Auswerteeinrichtung zugeführt werden. Neben dem sequentiellen Durchtakten der einzelnen Magnetfeldsonden 31 ist es aber auch möglich, parallel alle Amplitudenwerte zu erfassen und zu speichern. Im Falle des sequentiellen Abtastens kann die Anordnung so getroffen sein, daß die beim Umschalten zwischen den einzelnen Magnetfeldsonden 31 verwendeten Takte zur Ortsinformation herangezogen werden, indem mit jedem Takt beispielsweise zu einer neuen Adresse eines Speichers für die Amplitudenortskurve 17 umgeschaltet wird. Es ist auch möglich, die Taktzahl einem Speicher als digitales erstes Signal zuzuführen, dem der Amplitudenwert als zweites digitales Signal zugeordnet ist.

Die Anordnung gemäß Fig. 8 mit dicht nebeneinanderliegenden einzelnen Magnetfeldsonden 31 zur Erfassung der Normalkomponenten vermeidet die bei einer mechanischen Anordnung gemäß Fig. 7 üblichen Nachteile hinsichtlich der Wartung der mechanischen Teile und der geringeren Geschwindigkeit mechanischer Anordnungen.

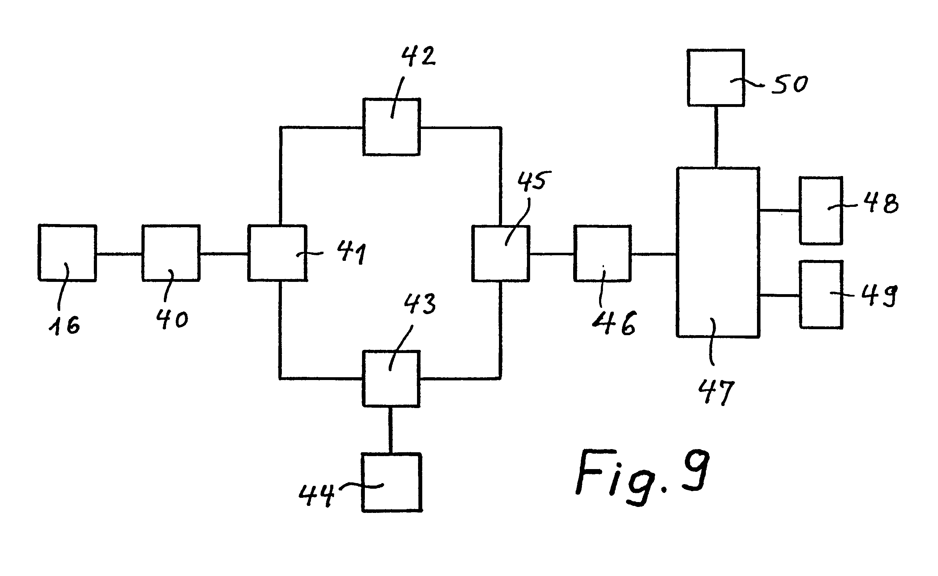

Eine Auswertevorrichtung zur Durchführung des oben erörterten Verfahrens und zur Auswertung der von der in Fig. 7 dargestellten Abtasteinrichtung 20 gelieferten Signale ist in Fig. 9 dargestellt. Die Magnetfeldsonde 16 der Abtasteinrichtung 20 ist mit einem Analog-Digital-Wandler 40 verbunden, der die analogen Werte der Amplitudenortskurven 11, 17 in entsprechende digitale Werte umsetzt. Der Ausgang des Analog-Digital-Wandlers 40 ist mit einem elektronischen Umschalter 41 verbundden. Während des Prüfschrittes I bei abgehobenem Joch 2 gelangen die digitalisierten Signale der Magnetfeldsonde 16 zu einem ersten Speicher 42. Während des Prüfschritts II bei aufgesetztem Joch gelangen die digitalisierten Signale der Magnetfeldsonde 16 über den Umschalter 41 zu einem zweiten Speicher 43. Der erste Speicher 42 dient somit zur Speicherung einer Vielzahl von Abtastpunkten der Amplitudenortskurve 11, während der zweite Speicher 43 eine Vielzahl von Punkten der Amplitudenortskurve 17 speichert. Die gespeicherten Werte können dabei jeweils die Normalkomponente darstellen, während die den x-Koordinaten zugeordneten Werte in einem weiteren Speicher 44 enthalten sind oder aber durch die Adressierung der Speicher 42, 43 festgelegt sind. Im letzteren Falle werden die abgetasteten Ordinatenwerte sequentiell in den Speichern 42, 43 abgelegt, wobei die Ortsinformation durch die jeweilige Adresse festgelegt ist.

Die Ausgänge der Speicher 42, 43 sind mit den beiden Eingängen einer Subtrahierschaltung 45 verbunden. Die Subtrahierschaltung 45 bildet die Differenz zwischen der oben diskutierten Amplitudenortskurve 17 und der eingangs erörterten Amplitudenortskurve 11. Am Ausgang der Subtrahierschaltung 45 liegt jeweils ein Wert der Differenzortskurve 18 an, so daß durch sequentielles Ansteuern der Speicher 42, 43 die gesamte Differenzortskurve 18 am Ausgang der Subtrahierschaltung 45 erhalten werden kann.

Der Ausgang der Subtrahierschaltung 45 ist mit einem Differenzspeicher 46 für die Speicherung der Differenzortskurve 18 verbunden.

Ein Auswerterechner 47 hat Zugriff auf den Differenzspeicher 46 und gestattet es daher, unter Verwendung der oben erwähnten Gleichungen (1) und (2) aus den im Differenzspeicher (46) gespeicherten Daten der Differenzortskurve 18 den Durchmesser d des Bewehrungsstabs 14 und die Überdeckung Yü zu bestimmen. Dazu werden durch den Auswerterechner 47 zunächst das Maximum und das Minimum der Differenzortskurve 18 bestimmt und anschließend unter Berücksichtigung der getrennt gespeicherten oder durch die Adresseninformation bestimmten örtlichen Koordinaten der Abstand Delta x zwischen dem Maximum und dem Minimim ermittelt.

Die durch Verwenden der Gleichungen (1) und (2) errechneten Werte werden schließlich durch eine Anzeigevorrichtung 48 für die Überdeckung und eine Anzeigevorrichtung 49 für den Durchmesser angezeigt.

Wie man in Fig. 9 erkennt, ist dem Auswerterechner 47 ein Kalibrierspeicher 50 zugeordnet, der für die verschiedenen Abstände der Bewehrungsstabmitte die Feldstärken H unter Berücksichtigung der Stromstärke I und der jeweils festliegenden Jochgeometrie des Joches 2 enthält.

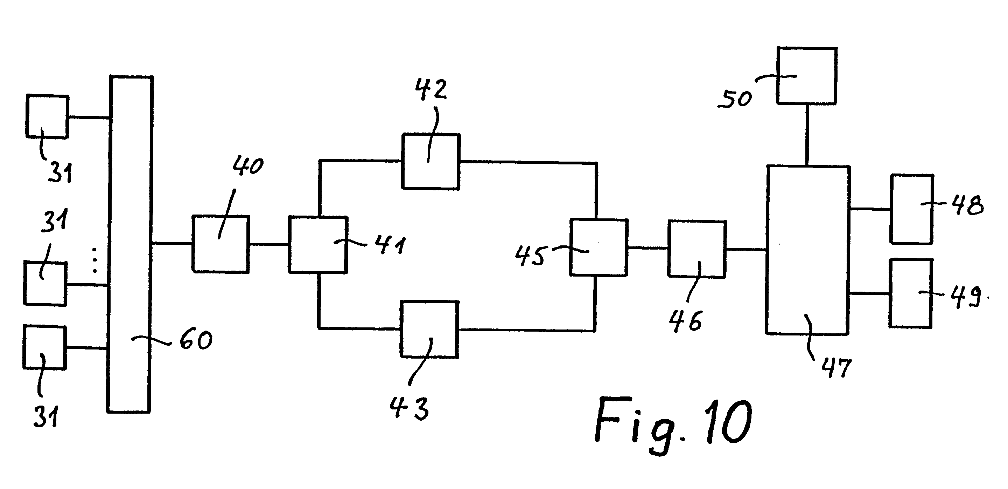

Während in Fig. 9 eine Auswertevorrichtung für eine Abtasteinrichtung 20 gemäß Fig. 7 dargestellt worden ist, zeigt Fig. 10 eine Auswerteeinrichtung für eine Abtasteinrichtung 20 gemäß Fig. 8 mit einem Sondenarrayträger 30, auf dem eine Vielzahl von einzelnen Magnetfeldsonden 31, beispielsweise äquidistant, angeordnet sind.

Die einzelnen Magnetfeldsonden 31 sind mit den Eingängen eines Multiplexers 60 verbunden, der die Magnetfeldsonden 31 sequentiell mit dem Eingang des Analog-Digital-Wandlers 40 verbindet. Entsprechend dem Ausführungsbeispiel gemäß Fig. 9 ist der Analog-Digital-Wandler 40 mit einem elektronischen Umschalter 41 verbunden. Über den Umschalter 41 gelangen die von den einzelnen Magnetfeldsonden 31 erfaßten Normalkomponenten während des Prüfschrittes I in den ersten Speicher 42 und während des Prüfschritts II in den zweiten Speicher 43. Die Ortsinformation bezüglich des Abtastweges ist in der Taktzahl des die einzelnen Magnetfeldsonden 31 durchtaktenden Multiplexers 60 enthalten.

Entsprechend dem Ausführungsbeispiel gemäß Fig. 9 sind auch beim Ausführungsbeispiel gemäß Fig. 10 die Ausgänge der Speicher 42, 43 mit einem Differenzspeicher 46, verbunden, in dem die Streufeldortskurve $H_{NS}(x)$ bzw. die Differenzortskurve 18 gespeichert ist. Unter Berücksichtigung der im Kalibrierspeicher 50 gespeicherten Feldwerte H für die jeweiligen Abstände der Bewehrungsstabmitten von der Oberfläche 8 führt der Auswerterechner 47 eine Auswertung der im Differenzspeicher 46 enthaltenen Meßwerte durch, um die Ergebnisse in der Anzeigevorrichtung 48 für die Überdeckung und die Anzeigevorrichtung 49 für den Durchmesser des Bewehrungsstabs 14 anzuzeigen.

## Ansprüche

1. Verfahren zum magnetischen Vermessen von in nichtmagnetischen Materialien (9) verlegten ferromagnetischen Gegenständen (14), insbesondere zum Vermessen von mit einer Betonüberdeckung versehenen Bewehrungsstählen in Beton, bei dem der Einfluß der ferromagnetischen Gegenstände (14) auf ein Magnetfeld (6) erfaßt und ausgewertet wird, indem die Materialoberfläche (8) des den zu untersuchenden ferromagnetischen Gegenstand (14) enthaltenden Materials (9) mit einem U-förmigen Aufsatzmagneten (1) abgetastet wird, zwischen dessen Polschuhen (4, 5) sich eine das Magnetfeld (6, 15) zwischen den Polschuhen (4, 5) erfassende Magnetfeldsonde (16) befindet, mit deren Hilfe Amplituden des Magnetfeldes (6, 15) erfaßt und aufgezeichnet werden, wobei die Differenz von verschiedenen Amplitudenortskurven (11, 17) gebildet wird, um die daraus resultierende Differenzortskurve (18) auszuwerten, wobei aus dem Abstand von Ortskurven-Extrema die Entfernung der Mitte des ferromagnetischen Gegenstandes (14) von der Materialoberfläche (8) abgeleitet und die Amplitudenortskurven (11, 17) zur Bestimmung des Querschnittes der ferromagnetischen Gegenstände (14) verwendet werden, **dadurch gekennzeichnet,** daß der Aufsatzmagnet (1) symmetrisch und rechtwinklig zur Sollage der Längsachse des zu vermessenden ferromagnetischen Gegenstandes (14) auf die Materialoberfläche (8) des nichtmagnetischen Materials (9) aufgesetzt wird und die rechtwinklig zur Materialoberfläche (8) des nichtmagnetischen Materials (9) orientierte Normalkomponente des Magnetfeldes (6, 15) zwischen den Polen (4, 5) Aufsatzmagneten (1) entlang der Materialoberfläche (8) erfaßt und abgespeichert wird, während der Aufsatzmagnet (1) am Aufsetzort festgehalten wird, und daß bei Abwesenheit ferromagnetischer Gegenstände (14) die Amplitudenortskurve (11) der Normalkomponente des Magnetfeldes (6) zwischen den Polen (4, 5) des nicht aufgesetzten Aufsatzmagneten (1) sowie eine Kalibrierkurve erfaßt und gespeichert werden, die die Erregerfeldstärke zwischen den Polen (4, 5) in Abhängigkeit vom Erregerstrom und allen möglichen zu prüfen den Entfernungen von der Mitte des ferromagnetischen Gegenstandes (14) enthält, daß aus den mit und ohne anwesenden ferromagnetischen Gegenstand (14) erfaßten Amplitudenortskurven (11, 17) eine Differenzortskurve (18) gebildet wird und aus dem Abstand der beiden Extrema der Differenzortskurve (18) die Entfernung der Mitte des ferromagnetischen Gegenstandes (14) von der Materialoberfläche (8) bestimmt wird und daß schließlich aus dem Abstand der beiden Extrema der Differenzortskurve (18), aus der einem der Extrema der Differenzortskurve (18) zugeordneten Größe des Magnetfeldes (6, 15) und aus der aus der Kalibrierkurve entnommenen Erregerfeldstärke am Ort des Gegenstandes (14) der Durchmesser des Gegenstandes (14) und damit auch der Abstand der Oberfläche des ferromagnetischen Gegenstandes (14) von der Materialoberfläche (8) bestimmt wird.

2. Vorrichtung zur Durchführung des Verfahrens nach Anspruch 1, bei der eine gleichstromdurchflossene Erregerspule (3) auf einem U-förmigen Joch (2) eines Aufsatzmagneten (1) vorgesehen ist, zwischen dessen Polschuhen (4, 5) eine Abtasteinrichtung (20) für das Magnetfeld (6, 15) im Bereich zwischen den Polschuhen (4, 5) vorgesehen ist, die an eine Auswerteeinrichtung (40 bis 60) angeschlossen ist, dadurch gekennzeichnet, daß durch die Abtasteinrichtung (20) die rechtwinklig zur als Aufsatzebene verwendete Materialoberfläche (8) orientierte Normalkomponente des Magnetfeldes (6, 15) entlang einem geradlinigen Abtastweg (10) zwischen den Polschuhen (4, 5) als Amplitudenortskurve (11, 17) erfaßbar ist, daß die Auswerteeinrichtung (40 bis 60) eine Subtrahierschaltung (45) für die Bestimmung einer Differenzortskurve (18) aus einer ersten bei der Anwesenheit des gesuchten ferromagnetischen Gegenstandes (14) erfaßten und einer zweiten ohne Anwesenheit des Gegenstandes (14) erfaßten Amplitudenortskurve (17, 11) aufweist, und daß der Ausgang der Subtrahierschaltung (45) mit einem Differenzortskurvenspeicher (46) verbunden ist, dessen Ausgang an eine einen Kalibrierspeicher (50) aufweisende Rechenschaltung (47) angeschlossen ist, die ein Programm zur Auswertung der Differenzortskurve (18) unter Berücksichtigung der dem Kalibrierspeicher (50) entnommenen Werte und zur Berechnung der Überdeckung (Yü) durch das nichtmagnetische Material (9) sowie des Durchmessers (d) des ferromagnetischen Gegenstandes (14) aufweist.

3. Vorrichtung nach Anspruch 2, dadurch gekennzeichnet, daß die Auswerteeinrichtung einen Analog-Digital-Wandler sowie sequentiell ansteuerbare Speicher (42, 43, 46) für die bei der Abtastung erhaltenen Ortskurven (11, 17, 18) aufweist.

4. Vorrichtung nach Anspruch 2, dadurch gekennzeichnet, daß der Rechenschaltung (47) eine Anzeigeeinheit (48) für die als nichtmagnetisches Material (9) verwendete Betonüberdeckung und eine Anzeigeeinheit (49) für den als ferromagnetischen Gegenstand (14) verwendeten Bewehrungsstahldurchmesser zugeordnet ist.

5. Vorrichtung nach Anspruch 2, dadurch gekennzeichnet, daß zwischen den Polschuhen (4, 5) eine mit einer Magnetfeldsonde (16) versehene Sondenhalterung (22) angeordnet ist, die auf einem Führungsgestänge (21) zwischen den Polschuhen (4, 5) geführt ist und durch eine mit einem Schrittmotor (23) angetriebenen Schneckenantrieb (24) verschiebbar ist.

6. Vorrichtung nach Anspruch 2, dadurch gekennzeichnet, daß zwischen den Polschuhen (4, 5) ein Sondenarrayträger (30) vorgesehen ist, der eine lineare Anordnung von einzelnen Magnetfeldsonden (31) aufweist, deren Ausgangssignale abtastbar sind.

7. Vorrichtung nach Anspruch 5 oder 6, dadurch gekennzeichnet, daß der durch die Magnetfeldsonden (16, 31) abgetastete Magnetfeldverlauf durch sequentielles Abspeichern einer Vielzahl von digitalisierten Einzelwerten des Magnetfeldverlaufes (6, 11, 17, 18) erfaßbar ist.

8. Vorrichtung nach Anspruch 2, dadurch gekennzeichnet, daß der Abstand zwischen den Polschuhen (4, 5) verstellbar ist.

## Claims

1. A method of magnetically surveying ferromagnetic objects (14) in non-magnetic materials (9), in particular surveying steel reinforcement members in concrete, which are provided with a concrete covering, wherein the influence of the ferromagnetic objects (14) on a magnetic field (6) is detected and evaluated by the surface (8) of the material (9) containing the ferromagnetic object (14) to be investigated being sensed with a U-shaped application magnet (1), between the pole shoes (4, 5) of which is disposed a magnetic field probe (16) which detects the magnetic field (6, 15) between the pole shoes (4, 5) and by means of which amplitudes of the magnetic field (6, 15) are detected and recorded, the difference between different amplitude loci (11, 17) being formed in order to evaluate the difference locus (18) resulting therefrom, the distance of the centre of the ferromagnetic object (14) from the surface (8) of the material being derived from the spacing of locus extremes and the amplitude loci (11, 17) being used to determine the cross-section of the ferromagnetic objects (14), characterised in that the application magnet (1) is applied to the surface (8) of the non-magnetic material (9) symmetrically and at a right angle relative to the reference position of the longitudinal axis of the ferromagnetic object (14) to be surveyed and the normal component of the magnetic field (6, 15) between the poles (4, 5) of the application magnet (1) along the surface (8) of the non-magnetic material (9), which component is oriented at a right angle to the surface (8) of the non-magnetic material (9), is detected and stored while the application magnet (1) is held fast at the place of application, and that in the absence of ferromagnetic objects (14) the amplitude locus (11) of the normal component of the magnetic field (6) between the poles (4, 5) of the application magnet (1) when not applied, and a calibration curve which contains the excitation field strength between the poles (4, 5) in dependence on the excitation current and all possible distances to be checked from the centre of the ferromagnetic object (14) are detected and stored, that a difference locus (18) is formed from the amplitude loci (11, 17) which are detected with and without the presence of a ferromagnetic object (14) and the distance of the centre of the ferromagnetic object (14) from the surface (8) of the material is determined from the spacing of the two extremes of the difference locus (18) and that finally the diameter of the object (14) and therewith also the spacing of the surface of the ferromagnetic object (14) from the surface (8) of the material is determined from the spacing of the two extremes of the difference locus (18), the magnitude of the magnetic field (6, 15) which is associated with one of the extremes of the difference locus (18) and from the excitation field strength which is taken from the calibration curve, at the location of the object (14).

2. Apparatus for carrying out the method according to claim 1 wherein there is provided an excitation coil (3) through which flows direct current, on a U-shaped yoke (2) of an application magnet (1), between the pole shoes (4, 5) of which is provided a sensing means (20) for the magnetic field (6, 15) in the region between the pole shoes (4, 5), which is connected to an evaluation means (40 to 60), characterised in that the sensing means (20) can detect the normal component, which is oriented at a right angle to the surface (8) of the material, which is used as the application plane, of the magnetic field (6, 15) along a rectilinear sensing path (10) between the pole shoes (4, 5) as an amplitude locus (11, 17), that the evaluation means (40 to 60) has a subtracting circuit (45) for determining a difference locus (18) from a first amplitude locus (17) which is detected in the presence of the ferromagnetic object (14) being sought and a second amplitude locus (11) which is detected without the presence of the object (14), and that the output of the subtracting circuit (45) is connected to a difference locus storage means (46) whose output is connected to a computing circuit (47) which has a calibration storage means (50) and which has a program for evaluation of the difference locus (18) having regard to the values taken from the calibration storage means (50) and for computing the covering (Yu) by the non-magnetic material (9) and the diameter (d) of the ferromagnetic object (14).

3. Apparatus according to claim 2 characterised in that the evaluation means has an analog-digital converter and sequentially actuable storage means (42, 43, 46) for the loci (11, 17, 18) obtained in the sensing operation.

4. Apparatus according to claim 2 characterised in that associated with the computing circuit (47) are a display unit (48) for the concrete covering used as the non-magnetic material (9) and a display unit (49) for the reinforcing steel diameter used as the ferromagnetic object (14).

5. Apparatus according to claim 2 characterised in that arranged between the pole shoes (4, 5) is a probe holding means (22) which is provided with a magnetic field probe (16) and which is guided on a guide bar assembly (21) between the pole shoes (4, 5) and which is displaceable by a screw drive (24) driven by a stepping motor (23).

6. Apparatus according to claim 2 characterised in that provided between the pole shoes (4, 5) is a probe array carrier (30) which has a linear array of individual magnetic field probes (31), the output signals of which can be sensed.

7. Apparatus according to claim 5 or claim 6 characterised in that the magnetic field configuration sensed by the magnetic field probes (16, 31) can be detected by sequential storage of a plurality of digitised individual values of the magnetic field configuration (6, 11, 17, 18).

8. Apparatus according to claim 2 characterised in that the spacing between the pole shoes (4, 5) is adjustable.

## Revendications

1. Procédé pour la mesure magnétique d'objets ferromagnétiques (14) posés dans des matériaux non magnétiques (9), en particulier pour mesurer, dans du béton, des aciers d'armatures pourvus d'un recouvrement de béton, selon lequel on détecte et on interprète l'influence des objets ferromagnétiques (14) sur

EP 0 220 457 B1

un champ magnétique (6), en balayant la surface (8) du matériau (9) contenant l'objet ferromagnétique (14) à analyser au moyen d'un aimant rapporté (1) en forme de U, entre les cornes polaires (4, 5) duquel se trouve une sonde de champ magnétique (16) détectant le champ magnétique (6, 15) entre les cornes polaires (4, 5), à l'aide de laquelle des amplitudes du champ magnétique (6, 15) sont détectées et enregistrées, et en formant la différence de différentes courbes locales d'amplitude (11, 17) en vue d'interpréter la courbe locale différentielle (18) résultante, l'éloignement du centre de l'objet ferromagnétique (14) par rapport à la surface (8) du matériau étant déduit de la distance entre les extrêmes des courbes locales, et les courbes locales d'amplitude (11, 17) étant utilisées pour déterminer la section des objets ferromagnétiques (14), **caractérisé** en ce qu'on pose l'aimant rapporté (1) sur la surface (8) du matériau non magnétique (9) symétriquement et perpendiculairement par rapport à la position de consigne de l'axe longitudinal de l'objet ferromagnétique (14) à mesurer, et on détecte et mémorise la composante normale, orientée perpendiculairement à la surface (8) du matériau non magnétique (9), du champ magnétique (6, 15) entre les pôles (4, 5) de l'aimant rapporté (1) le long de la surface (8) du matériau, tandis que l'aimant rapporté (1) est maintenu fixé à son lieu d'installation, et en ce qu'en l'absence d'objets ferromagnétiques (14), on détecte et mémorise la courbe locale d'amplitude (11) de la composante normale du champ magnétique (6) entre les pôles (4, 5) de l'aimant rapporté (1) non installé, ainsi qu'une courbe d'étalonnage qui contient l'intensité du champ d'excitation entre les pôles (4, 5) en fonction du courant d'excitation et de tous les éloignements éventuels à contrôler du centre de l'objet ferromagnétique (14), en ce qu'on forme une courbe locale différentielle (18) à partir des courbes locales d'amplitude (11, 17) détectées en présence et en l'absence d'objet ferromagnétique (14), et on détermine l'éloignement du centre de l'objet ferromagnétique (14) par rapport à la surface (8) du matériau à partir de la distance des deux extrêmes de la courbe locale différentielle (18), et en ce qu'enfin, à partir de la distance des deux extrêmes de la courbe locale différentielle (18), à partir de la valeur du champ magnétique (6, 15) associée à un des extrêmes de la courbe locale différentielle (18), et à partir de l'intensité de champ d'excitation au lieu de l'objet (14) prélevée sur la courbe d'étalonnage, on détermine le diamètre de l'objet (14), et donc la distance entre la surface de l'objet ferromagnétique (14) et la surface (8) du matériau.

2. Dispositif pour la mise en oeuvre du procédé selon la revendication 1, dans lequel une bobine d'excitation (3), traversée par un courant continu, est prévue sur une culasse en forme de U (2) d'un aimant rapporté (1), entre les cornes polaires (4, 5) duquel est prévu un dispositif de balayage (20) pour le champ magnétique (6, 15) dans la région entre les cornes polaires (4, 5), lequel dispositif de balayage est raccordé par un dispositif d'interprétation (40 à 60), **caractérisé** en ce que le dispositif de balayage (20) permet de détecter, sous la forme d'une courbe locale d'amplitude (11, 17), la composante normale du champ magnétique (6, 15), orientée perpendiculairement à la surface (8) du matériau utilisée comme plan d'installation, le long d'un parcours de balayage rectiligne (10) entre les cornes polaires (4, 5), en ce que le dispositif d'interprétation (40 à 60) présente un circuit soustracteur (45) pour la détermination d'une courbe locale différentielle (18) à partir d'une première et d'une seconde courbe locale d'amplitude (17, 11), détectées respectivement en présence de l'objet ferromagnétique (14) étudié et en l'absence de l'objet (14), et en ce que la sortie du circuit soustracteur (45) est reliée à une mémoire de courbe locale différentielle (46), dont la sortie est raccordée à un circuit de calcul (47) présentant une mémoire d'étalonnage (50), circuit qui présente un programme d'interprétation de la courbe locale différentielle (18) en tenant compte des valeurs tirées de la mémoire d'étalonnage (50), et de calcul du recouvrement (Yü) par le matériau non magnétique (9), ainsi que du diamètre (d) de l'objet ferromagnétique (14).

3. Dispositif selon la revendication 2, **caractérisé** en ce que le dispositif d'interprétation présente un convertisseur analogique-numérique, ainsi que des mémoires séquentiellement asservissables (42, 43, 46) pour les courbes locales (11, 17, 18) obtenues lors du balayage.

4. Dispositif selon la revendication 2, **caractérisé** en ce qu'une unité d'affichage (48) pour le recouvrement de béton utilisé comme matériau non magnétique (9), et une unité d'affichage (49) pour le diamètre de l'acier d'armature utilisé comme objet ferromagnétique (14), sont associées au circuit de calcul (47).

5. Dispositif selon la revendication 2, **caractérisé** en ce qu'un support de sonde (22), muni d'une sonde de champ magnétique (16), est disposé entre les cornes polaires (4, 5), support qui est guidé entre les cornes polaires (4, 5) sur des tiges de guidage (21), qui peut être déplacé en translation au moyen d'un entraînement à vis sans fin (24) entraîné par un moteur pas à pas (23).

6. Dispositif selon la revendication 2, **caractérisé** en ce qu'un support d'agencement de sondes (30) est prévu entre les cornes polaires (4, 5), support qui présente un agencement linéaire de sondes individuelles de champ magnétique (31), dont les signaux de sortie peuvent être analysés.

7. Dispositif selon la revendication 5 ou 6, **caractérisé** en ce que l'allure de champ magnétique balayée par les sondes de champ magnétique (16, 31) peut être détectée par la mémorisation séquentielle d'une multiplicité de valeurs individuelles numérisées de l'allure de champ magnétique (6, 11, 17, 18).

9

8. Dispositif selon la revendication 2, **caractérisé** en ce que la distance entre les cornes polaires (4, 5) est réglable.

Fig.1

Fig.2

=

1

2

3

4

S    7    15    8    N    x

Yü    9    5

6    12    14

Fig.3

$H_{N\mathbb{I}}[x]$

17

x

17

4    10    9

5

14

Fig.4

Fig. 5

Fig. 6

Fig. 7

Fig. 8

Fig. 9

Fig. 10

EP 0 220 457 B1